# EUROPÄISCHE PATENTANMELDUNG

(11) **EP 1 862 687 A2**
(43) Veröffentlichungstag der Anmeldung: **05.12.2007**
(21) Anmeldenummer: 07009900.7
(22) Anmeldetag: 18.05.2007
(51) Int. Cl.: F16D 21/06

(54) **Drehmomentübertragungsanordnung für den Antriebsstrang eines Fahrzeugs**

(30) Priorität: 01.06.2006 DE 102006025527
(71) Anmelder: ZF FRIEDRICHSHAFEN AG, 88046 Friedrichshafen (DE)
(72) Erfinder: Peterseim, Michael, 97493 Bergrheinfeld (DE); Vogt, Sebastian, 97616 Bad Neustadt (DE)

(57) **Zusammenfassung**

Eine Drehmomentübertragungsanordnung für den Antriebsstrang eines Fahrzeugs, umfassend: eine Doppelkupplungsanordnung (12) mit einer zentralen Widerlagerplatte (30) und an beiden axialen Seiten der Widerlagerplatte (30) jeweils einem Kupplungsbereich (32, 34), wobei jeder Kupplungsbereich (32, 34) eine an ein Abtriebsorgan (64, 62) angekoppelte oder anzukoppelnde Kupplungsscheibe (68, 70) umfasst, welche gegen die Widerlagerplatte (30) pressbar ist, wobei die Widerlagerplatte (30) einen radial innen liegenden Lagerungsbereich (84) zur in wenigstens einer axialen Richtung feststehenden Lagerung bezüglich einem der an die Kupplungsscheiben anzukoppelnden Abtriebsorgane (32, 34) aufweist, sowie eine Schwungmassenanordnung (14), über welche ein Drehmoment zwischen einem Antriebsorgan und der Doppelkupplungsanordnung (12) zu übertragen ist, wobei die Schwungmassenanordnung (14) eine Kopplungsanordnung (44) aufweist, die in einem radial äußeren Bereich mit der Doppelkupplungsanordnung (12) axialelastisch oder/und radialelastisch gekoppelt oder zu koppeln ist.

## Beschreibung

Die vorliegende Erfindung betrifft eine Drehmomentübertragungsanordnung für den Antriebsstrang eines Fahrzeugs, umfassend eine Doppelkupplungsanordnung und eine Schwungmassenanordnung, bei welcher ein Drehmoment zwischen einem Antriebsorgan und der Doppelkupplungsanordnung zu übertragen ist.

Aus der deutschen Auslegeschrift 12 92 962 ist eine derartige Drehmomentübertragungsanordnung bekannt. Die Schwungmassenanordnung umfasst dabei ein massiv aufgebautes Schwungrad, das radial innen fest an eine Antriebswelle, also eine Kurbelwelle einer Brennkraftmaschine, angeschlossen ist, und an das radial außen an verschiedenen Umfangspositionen eine zentrale Widerlagerplatte der Doppelkupplungsanordnung angeschraubt ist. In ihrem radial inneren Bereich weist diese Widerlagerplatte einen Lagerungsbereich auf, in welchem sie über ein Drehentkopplungslager auf dem axialen Ende einer mit einer der beiden Kupplungsscheiben der Doppelkupplungsanordnung drehfest zu koppelnden Getriebeeingangswellen radial gestützt bzw. unter Bereitstellung einer Drehentkopplung gelagert ist. Für diesen Lagerungsbereich bzw. das die zentrale Widerlagerplatte bezüglich der Getriebeeingangswelle lagernde Drehentkopplungslager ist eine definierte Axialpositionierung vorgegeben, so dass zumindest fertigungsbedingte bzw. montagebedingte Axialversätze in gewissem Ausmaß kompensiert werden können. Ein derartiger Aufbau führt zu einem vergleichsweise komplex durchzuführenden Montagevorgang und bringt aufgrund mangelnder definierter axialer Abstützung der zentralen Widerlagerplatte das Problem mit sich, dass Betätigungskräfte für die beiden Kupplungsbereiche der Doppelkupplungsanordnung in die Kurbelwelle des Antriebsaggregats eingeleitet und innerhalb des Antriebsaggregats durch Kurbelwellenlager aufgenommen werden müssen.

Es ist die Aufgabe der vorliegenden Erfindung, eine Drehmomentübertragungsanordnung für einen Antriebsstrang eines Fahrzeugs mit Doppelkupplungsanordnung bereitzustellen, welche bei vereinfachter Montierbarkeit eine geringere Belastung anderer Systembereiche mit sich bringt.

Erfindungsgemäß wird diese Aufgabe gelöst durch eine Drehmomentübertragungsanordnung für den Antriebsstrang eines Fahrzeugs, umfassend: eine Doppelkupplungsanordnung mit einer zentralen Widerlagerplatte und an beiden axialen Seiten der Widerlagerplatte jeweils einem Kupplungsbereich, wobei jeder Kupplungsbereich eine an ein Abtriebsorgan angekoppelte oder anzukoppelnde Kupplungsscheibe umfasst, welche gegen die Widerlagerplatte pressbar ist, wobei die Widerlagerplatte einen radial innen liegenden Lagerungsbereich zur in wenigstens einer axialen Richtung feststehenden Lagerung bezüglich einem der an die Kupplungsscheiben anzukoppelnden Abtriebsorgane aufweist, eine Schwungmassenanordnung, über welche ein Drehmoment zwischen einem Antriebsorgan und der Doppelkupplungsanordnung zu übertragen ist, wobei die Schwungmassenanordnung eine Kopplungsanordnung aufweist, die in einem radial äußeren Bereich mit der Doppelkupplungsanordnung axialelastisch oder/und radialelastisch gekoppelt oder zu koppeln ist.

Elementar ist bei der erfindungsgemäßen Drehmomentübertragungsanordnung, dass hier die Doppelkupplungsanordnung vermittels der zentralen Widerlagerplatte zumindest in einer axialen Richtung feststehend gelagert und mithin gehaltert wird. Dies vereinfacht den Montagevorgang, da somit die Doppelkupplungsanordnung beispielsweise mit einem Getriebe zu einer vormontierten Einheit zusammengefasst werden kann, und bringt weiterhin den Vorteil mit sich, dass Axialkräfte innerhalb der Getriebe-Doppelkupplungsanordnung-Baugruppe aufgenommen werden können und nicht beispielsweise in ein Antriebsaggregat eingeleitet und dort abgestützt werden müssen.

Um die vorangehend angesprochene Zusammenfassung zu einer Baugruppe bei weiter erleichterter Montage realisieren zu können, wird vorgeschlagen, dass die Kopplungsanordnung die Widerlagerplatte radial außen wenigstens bereichsweise übergreift und dort durch Befestigungsorgane mit der Widerlagerplatte gekoppelt oder zu koppeln ist. Dabei kann weiterhin vorgesehen sein, die die Kopplungsanordnung mit der Widerlagerplatte koppelnden Befestigungsorgane sich näherungsweise in Umfangs- oder Tangentialrichtung erstrecken.

Die Versätze in axialer bzw. radialer Richtung ausgleichende Kopplung der Schwungmassenanordnung mit der Doppelkupplungsanordnung kann in einfacher Weise dadurch realisiert werden, dass die Kopplungsanordnung ein erstes ringartiges Kopplungselement und ein damit axialelastisch oder/und radialealstisch verbundenes zweites ringartiges Kopplungselement umfasst, wobei das zweite ringartige Kopplungselement mit der Doppelkupplungsanordnung gekoppelt oder zu koppeln ist. Beispielsweise kann vorgesehen sein, dass das erste ringartige Kopplungselement und das zweite ringartige Kopplungselement durch blattfederartige Verbindungselemente miteinander verbunden sind.

Bei einer hinsichtlich der Minderung von in einem Antriebsstrang auftretenden Drehungleichförmigkeiten vorteilhaften Ausgestaltungsformen wird vorgeschlagen, dass die Schwungmassenanordnung eine Torsionsschwingungsdämpferanordnung umfasst mit einem an das Antriebsorgan anzukoppelnden Eingangsbereich und einem mit der Kopplungsanordnung verbundenen Ausgangsbereich. Wenn weiterhin vorgesehen ist, dass der Ausgangsbereich und der Eingangsbereich über eine wenigstens eine Radialrelativbewegung zwischen diesen zulassende Lagerungsanordnung bezüglich einander abgestützt sind, so ist im Bereich der Schwungmassenanordnung selbst lediglich für eine Grobzentrierung des Eingangsbereichs bezüglich des Ausgangsbereichs gesorgt, was die durch die Kopplungsanordnung bereits erfüllte Funktionalität des Ausgleichs von Radial- bzw. Axialversätzen weiter unterstützt.

Beispielsweise kann die Torsionsschwingungsdämpferanordnung zwischen dem Eingangsbereich und dem Ausgangsbereich zwei seriell wirksame und radial gestaffelt angeordnete Dämpferstufen umfassen, was bei kompakter Baugröße zu einem großen Dämpfungswinkel führt.

Jeder der Kupplungsbereiche kann beispielsweise eine Druckplattenbaugruppe umfassen, wobei jede Druckplattenbaugruppe ein an der Widerlagerplatte festgelegtes oder festzulegendes Gehäuse, eine bezüglich des Gehäuses im Wesentlichen drehfest und axial bewegbar gehaltene Anpressplatte sowie eine bezüglich der Anpressplatte und des Gehäuses abgestützte Kraftbeaufschlagungsanordnung umfasst. Dabei kann insbesondere bei dem erfindungsgemäßen Aufbau vorgesehen sein, dass die beiden Druckplattenbaugruppen zueinander im Wesentlichen baugleich sind, so dass identische oder nahezu identische Bauteile mit dem Vorteil der Kostenreduzierung verwendet werden können.

Die vorliegende Erfindung betrifft ferner ein Verfahren zum Aufbau eines Antriebsstrangs mit einer erfindungsgemäßen Drehmomentübertragungsanordnung, welches Verfahren die Maßnahmen umfasst:
a) Koppeln der Schwungmassenanordnung zusammen mit der damit fest verbundenen Kopplungsanordnung mit einem Antriebsorgan,
b) Koppeln der Kupplungsscheiben der Doppelkupplungsanordnung mit diesen zugeordneten Abtriebsorganen und dabei Lagern der zentralen Widerlagerplatte mit ihrem Lagerungsbereich bezüglich einem der Abtriebsorgane,
c) nach Durchführung der Maßnahmen a) und b), Koppeln der Kopplungsanordnung mit der Doppelkupplungsanordnung in einem radial äußeren Bereich derselben.

Bei diesem Verfahren kann weiter vorgesehen sein, dass die Maßnahme b) die Teilmaßnahmen umfasst:
b₁) Koppeln der Kupplungsscheibe eines an der Widerlagerplatte festgelegten Kupplungsbereichs mit einem Abtriebsorgan und Lagern der Widerlagerplatte bezüglich dieses Abtriebsorgans bei nicht mit der Widerlagerplatte verbundenem anderem Kupplungsbereich,
b₂) Ankoppeln der Kupplungsscheibe des anderen Kupplungsbereichs an das andere Abtriebsorgan und Festlegen dieses Kupplungsbereichs an der Widerlagerplatte.

Dabei wird die Teilmaßnahme b₁) besonders dadurch leichter durchführbar, dass bei deren Durchführung die Widerlagerplatte mit ihrem Lagerungsbereich auf das eine Abtriebsorgan aufgeschoben und daran in axialer Richtung im Wesentlichen unbewegbar arretiert wird.

Die vorliegende Erfindung wird nachfolgend mit Bezug auf die beiliegenden Zeichnungen detailliert beschrieben. Es zeigt:
- Fig. 1: eine Längsschnittansicht einer erfindungsgemäß aufgebauten Drehmomentübertragungsanordnung;
- Fig. 2: die die Torsionsschwingungsdämpferanordnung und die Kopplungsanordnung der Drehmomentübertragungsanordnung der Fig. 1 umfassende Vormontagebaugruppe;
- Fig. 3: die die Doppelkupplungsanordnung der Drehmomentübertragungsanordnung der Fig. 1 umfassende Vormontagebaugruppe in einer Zwischen-Montagestufe.

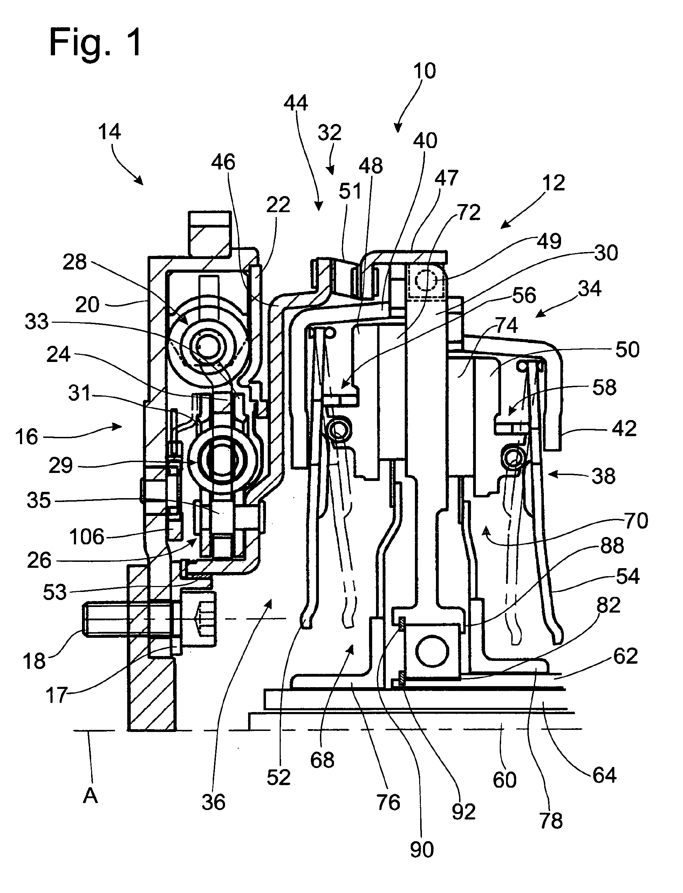

In Fig. 1 ist eine Drehmomentübertragungsanordnung allgemein mit 10 bezeichnet. Diese Drehmomentübertragungsanordnung umfasst zwei wesentliche Systembereiche. Einer davon ist eine Doppelkupplungsanordnung 12. Der andere dieser Systembereiche ist eine in Form eines Zweimassenschwungrads ausgestaltete Torsionsschwingungsdämpferanordnung 14. Diese ist mit einer Primärseite 16 ausgestaltet, die in einem radial inneren Bereich über eine Mehrzahl von Schraubbolzen 18 oder dergleichen an ein Antriebsorgan, beispielsweise eine Kurbelwelle einer Brennkraftmaschine, drehfest anzukoppeln ist. Die Primärseite 16 ist im Wesentlichen mit zwei Deckscheibenelementen 20, 22 aufgebaut, zwischen welche ein Zentralscheibenelement 24 einer Sekundärseite 26 der Torsionsschwingungsdämpferanordnung 14 eingreift. Die Torsionsschwingungsdämpferanordnung 14 ist zweistufig aufgebaut mit zwei jeweils durch Dämpferelementenanordnungen bzw. Dämpferfedern 28, 29 repräsentierten Dämpferstufen. Die Dämpferelementenanordnung 28 der radial äußeren Dämpferstufe wirkt dabei einerseits mit den Deckscheibenelementen 20, 22 und andererseits einem bezüglich dieser Deckscheibenelemente zentral angeordneten Zentralscheibenelement 24 zusammen. Dieses Zentralscheibenelement 24 bildet bei Drehmomentübertragung von einem Antriebsaggregat auf ein Getriebe den Ausgang der ersten Dämpferstufe und den Eingang der zweiten durch die Dämpferelementenanordnung 29 repräsentierten Dämpferstufe. Diese zweite Dämpferstufe umfasst zwei beidseits des Zentralscheibenelements 24 angeordnete angeordnete Deckscheibenelemente 31, 33, die im radial inneren Bereich über eine Mehrzahl von Nietbolzen oder dergleichen mit einer nachfolgend noch beschriebenen Kopplungsanordnung 44 fest verbunden sind und mithin im Wesentlichen auch den Ausgangsbereich bzw. die Sekundärseite 26 der Torsionsschwingungsdämpferanordnung 14 bereitstellen. Mit dem Deckscheibenelement 31 kann weiterhin ein nach Art eines Hohlrads ausgebildetes Antriebselement 104 fest verbunden sein, das eine Mehrzahl von über den Umfang verteilt am Deckscheibenelement 20 drehbar getragenen Planetenräder 106 zur Drehung antreibt.

Durch den zweistufigen Aufbau der Torsionsschwingungsdämpferanordnung mit den beiden im Wesentlichen radial gestaffelten und seriell wirksamen Dämpferstufen 28, 29 wird es möglich, einerseits einen großen Relativdrehwinkelbereich zwischen der Primärseite 16 und der Sekundärseite 26 zu erzeugen, und andererseits durch entsprechende Ausgestaltung der Dämpferelementenanordnungen 28, 29 für verschiedene Lastbereiche entsprechende Dämpfungscharakteristiken bereitzustellen. Zusätzlich kann beispielsweise eine nicht weiter dargestellte Reibanordnung vorgesehen sein, so dass bei Auftreten von Drehungleichförmigkeiten auch Schwingungsenergie in definiertem Maße durch diese Reibung dissipiert werden kann.

Es sei darauf hingewiesen, dass die Torsionsschwingungsdämpferanordnung 14 vorangehend nur mit Hinblick auf die wesentlichen konstruktiven Aspekte beschrieben wurde. Es ist selbstverständlich, dass diese in verschiedensten Aspekten variiert werden kann.

Die Doppelkupplungsanordnung 12 umfasst eine zentrale Widerlagerplatte 30 und an beiden axialen Seiten - axial bezogen auf eine Drehachse A des Gesamtsystems - davon jeweils einen Kupplungsbereich 32, 34. Die beiden Kupplungsbereiche 32, 34 sind vorzugsweise von im Wesentlichen gleichem Aufbau und lediglich seitenverkehrt an die zentrale Widerlagerplatte 30 angebunden. So umfasst jeder dieser Kupplungsbereiche 32, 34 eine Druckplattenbaugruppe 36 bzw. 38 mit einem im Wesentlichen topfartigen Gehäuse 40, 42. Radial außen sind diese beiden Gehäuse 40, 42 beispielsweise durch Schraubbolzen fest an die Widerlagerplatte 30 angebunden. An dem der Torsionsschwingungsdämpferanordnung 14 nahe liegend und somit an der einem Antriebsaggregat zugewandt und von einem Getriebe abgewandt liegenden Seite der Widerlagerplatte 30 vorgesehenen Gehäuse 40 ist eine drehfeste Kopplung zwischen der Doppelkupplungsanordnung 12 und der Torsionsschwingungsdämpferanordnung 14 bei gleichwohl ermöglichter Relativaxialbewegbarkeit realisiert.

Jeder der beiden Kupplungsbereiche 32, 34 bzw. jede der Druckplattenbaugruppen 36, 38 umfasst weiterhin eine Anpressplatte 48, 50. Diese Anpressplatten 48, 50 können beispielsweise über Tangentialblattfedern oder dergleichen mit dem zugehörigen Gehäuse 40 bzw. 42 oder der Widerlagerplatte 30 drehfest, jedoch axial beweglich gekoppelt sein. Die Kopplung mit den Gehäusen 40, 42 ist auf Grund des Bereitstellens der Druckplattenbaugruppen 36, 38 als vormontierte Baugruppen bevorzugt. Weiterhin weist jede der Druckplattenbaugruppen 36, 38 eine Kraftbeaufschlagungsanordnung 52 bzw. 54 auf. Diese können grundsätzlich nach Art einer Membranfeder aufgebaut sein und mit einer gewissen Vorspannung in die jeweilige Druckplattenbaugruppe 36 bzw. 38 integriert sein. Beide Kraftbeaufschlagungsanordnungen 52, 54 sind in ihrem radial äußeren Bereich bezüglich des jeweils zugeordneten Gehäuses 40, 42 axial abgestützt und können in einem radial weiter innen liegenden Bereich beispielsweise über eine jeweilige Verschleißkompensationsanordnung 56, 58 die zugehörige Anpressplatte 48, 50 beaufschlagen. Da bei einer derartigen Doppelkupplungsanordnung 12 im Allgemeinen nur über einen der Kupplungsbereiche 32, 34 ein Drehmoment zu übertragen ist, während der andere Kupplungsbereich in einem Ausrückzustand sein sollte, ist es vorteilhaft, die beiden Kupplungsbereiche 32, 34 als so genannte Normal-Offen-Kupplungen auszugestalten. Dies kann dadurch realisiert werden, dass die beiden Kraftbeaufschlagungsanordnungen 52, 54 grundsätzlich in Ausrückrichtung vorgespannt sind, also in einer Richtung, in welcher sie die zugehörigen Anpressplatten 48, 50 freigeben. Zum Einrücken eines jeweiligen Kupplungsbereichs, also zum Beaufschlagen der Anpressplatten 48, 50 in Richtung auf die zentrale Widerlagerplatte 30 zu, kann dann radial innen über ein jeweils zugeordnetes Betätigungssystem an den Kraftbeaufschlagungsanordnungen 52, 54 angegriffen werden, um diese dort in Richtung auf die Widerlagerplatte 30 zuzubewegen und damit auch die Anpressplatten 48 bzw. 50 in der gleichen Richtung zu beaufschlagen. In Fig. 1 ist in Zuordnung zur Kraftbeaufschlagungsanordnung 52 des Kupplungsbereichs 30 von diesem Bestätigungssystem ein stangenartiges Betätigungselement 60 erkennbar, das in einer zentralen Öffnung der koaxial inneren von zwei zueinander koaxial liegenden Getriebeeingangswellen 62, 64 verläuft, dargestellt. Das Betätigungselement 60 kann an seinem in Fig. 1 erkennbaren Ende mit einem nicht dargestellten topfartigen Übertragungselement 66 fest verbunden sein, das bei Bewegung des Bestätigungselements 60 in der Darstellung der Fig. 1 nach rechts, also in die koaxial innere Abtriebswelle bzw. Getriebeeingangswelle 64 hinein, den radial inneren Bereich der Kraftbeaufschlagungsanordnung 52 beaufschlagt und damit auch die Anpressplatte 48 in Richtung auf die Widerlagerplatte 30 zu bewegt.

Jeder Kupplungsbereich 32, 34 weist in Zuordnung zur jeweiligen Druckplattenbaugruppe 36, 38 weiterhin eine Kupplungsscheibe 68, 70 auf. Jede Kupplungsscheibe weist einen radial äußeren Reibbereich 72, 74 auf, der jeweils zwischen der zentralen Widerlagerplatte 30 und der zugehörigen Anpressplatte 48 oder 50 liegt und mithin dazwischen einspannbar ist. Radial innen weisen die Kupplungsscheiben 68, 70 jeweils einen Nabenbereich 76, 78 auf. Der Nabenbereich 76 der Kupplungsscheibe 68 ist auf der koaxial inneren Abtriebswelle bzw. Getriebeeingangswelle 64 abgestützt und, wie allgemein üblich, mit einer Verzahnung versehen, die mit einer entsprechenden Verzahnung am axialen Ende der Abtriebswelle 64 in Kämmeingriff steht und somit eine drehfeste Kopplung zwischen der Kupplungsscheibe 68 und dieser Abtriebswelle 64 realisiert, bei gleichwohl ermöglichter Relativaxialbewegbarkeit. Der Nabenbereich 78 der Kupplungsscheibe 70 ist auf der koaxial äußeren Abtriebswelle über eine an diesem Nabenbereich 78 vorgesehene Verzahnung in Kämmeingriff mit einer entsprechenden Verzahnung an dieser koaxial äußeren Abtriebswelle 62.

Die zentrale Widerlagerplatte 30 weist radial innen einen Lagerungsbereich 84 auf. Dieser Lagerungsbereich umfasst ein mit der Widerlagerplatte 30 axial festgekoppeltes Drehentkopplungslager 86, das zwischen einem festen Axialbewegungsanschlag 88 an der Widerlagerplatte 30 und einem an der Widerlagerplatte 30 festzulegenden Sicherungsring 90 axial arretiert ist. Das Drehentkopplungslager 86 ist weiterhin an der koaxial äußeren Abtriebswelle 62 in radial definierter Positionierung abgestützt, so dass über diesen Lagerungsbereich 84, insbesondere das Drehentkopplungslager 86 desselben die Widerlagerplatte 30 an der koaxial äußeren Abtriebswelle 62 gelagert ist. Eine Schulter 82 und ein weiterer Sicherungsring 92 sichern das Drehentkopplungslager 86 und mithin die gesamte Widerlagerplatte 30 in axialer Richtung an der koaxial äußeren Abtriebswelle 62.

Eine Kopplungsanordnung 44, vermittels welcher die Torsionsschwingungsdämpferanordung 14 und die Doppelkupplungsanordnung 12 zur Drehmomentübertragung gekoppelt sind, umfasst zwei ringartige Kopplungselemente 46 und 47. Das erste dieser ringartige Kopplungselement ist in seinem radial inneren Bereich durch eine Mehrzahl von Nietbolzen 35 mit der Sekundärseite 26, insbesondere den beiden Deckscheibenelementen 31 und 33 der zweiten Dämpferstufe 29 fest verbunden. In einem axialen, zylindrischen Ansatz des ersten ringartigen Kopplungselements 46 ist dieses über eine Lagerungsanordnung 53 bezüglich der Primärseite 16, nämlich einem zusammen mit der Primärseite 16 durch die Schraubbolzen 18 an dem Antriebsorgan festgelegten ringartigen Lagerungselement 17, gelagert. Die Lagerungsanordnung 53 kann beispielsweise zwei Lagerungsringe umfassen, von welchen der eine die Axialabstützung und der andere die Radialabstützung übernimmt. Insbesondere kann vorgesehen sein, dass die Lagerungsanordnung 53 nur eine Grobzentrierung der Sekundärseite 26 bezüglich der Primärseite 16 vornimmt, jedoch ein gewisses Bewegungsspiel der Sekundärseite 26 zulässt. Zu diesem Zwecke kann beispielsweise vergleichsweise elastischer Kunststoff zum Aufbau der Lagerungsanordnung 53 eingesetzt werden.

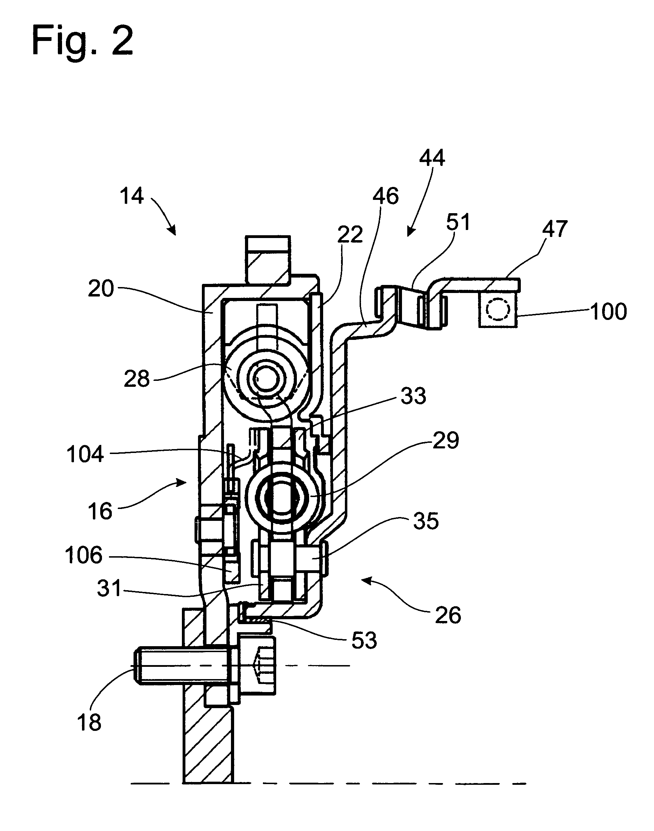

Das zweite ringartige Kopplungselement 47 ist so ausgebildet, dass es zumindest in einigen Umfangsbereichen die zentrale Widerlagerplatte 30 radial außen umgibt. Vorzugsweise umgibt das Kopplungselement 47 die Widerlagerplatte 30 vollständig und weist, wie in Fig. 2 auch erkennbar, an einigen Umfangspositionen lappenartige Abbiegungen 100 auf, die näherungsweise nach radial innen sich erstreckend ausgebildet sind bzw. bezüglich einer Radialrichtung etwas schräggestellt sind. Am äußeren Umfangsbereich der Widerlagerplatte 30 sind entsprechende Ausnehmungen vorgesehen, in welche bei der in Fig. 1 erkennbaren Zusammenbausituation die Abbiegungen 100 eingreifend positioniert sind. Durch Öffnungen in den Abbiegungen 100 können dann Befestigungsbolzen 49, beispielsweise Schraubbolzen, hindurchgeführt und in entsprechende Gewindeöffnungen der zentralen Widerlagerplatte 30 eingeschraubt werden. Auf diese Art und Weise kann das ringartige Kopplungselement 47 an mehreren Umfangspositionen auf einfache Art und Weise durch Zugriff von radial außen mit der Widerlagerplatte 30 fest gekoppelt werden.

Die beiden ringartigen Kopplungselemente 46 und 47 sind durch Verbindungselemente 51 miteinander verbunden. Diese Verbindungselemente 51 können beispielsweise nach Art von Blattfedern ausgebildet sein und, ähnlich wie die die Anpressplatten 48 und 50 ankoppelnden Tangentialblattfedern, so gestaltet, dass sie eine Bewegbarkeit zwischen den beiden Kopplungselementen 46, 47 ermöglichen. Auf diese Art und Weise wird es möglich, Axialverstätze und auch Radialversätze bzw. im Drehbetrieb möglicherweise auftretende Taumelbewegungen durch entsprechende Verformung der Verbindungselemente 51 aufzunehmen.

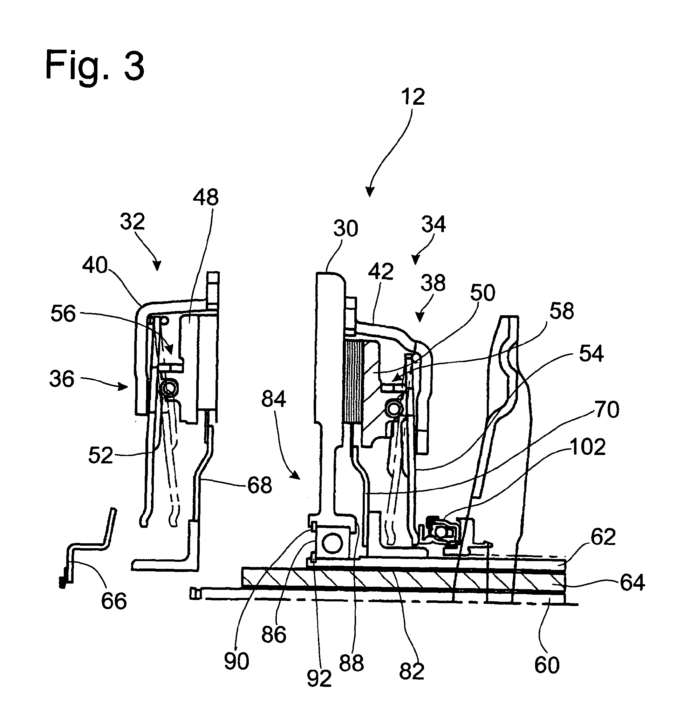

Das Zusammenfügen der in Fig. 1 dargestellten Drehmomentübertragungsanordnung 10 bzw. eines damit ausgebildeten Antriebsstrangs kann wie folgt erfolgen: Zunächst werden die Torsionsschwingungsdämpferanordnung 14 zusammen mit der Kopplungsanordnung 44 einerseits und die Doppelkupplungsanordnung 12 andererseits voneinander getrennt bereitgestellt. Die Kopplungsanordnung 44 ist an der Sekundärseite 26 bzw. dem Ausgangsbereich der Torsionsschwingungsdämpferanordnung 14 festgelegt, und in diesem Zustand kann die in Fig. 2 erkennbare Baugruppe dann beispielsweise an einem Kurbelwellenflansch einer Kurbelwelle festgelegt werden. Unabhängig davon kann die andere Baugruppe, nämlich die Doppelkupplung 12, in dem in Fig. 3 dargestellten Montagezustand an den beiden Getriebeeingangswellen 62 und 64 festgelegt werden. Dabei wird so vorgegangen, dass zunächst derjenige Kupplungsbereich 32, der an der getriebeabgewandt liegenden Seite der Widerlagerplatte 30 zu positionieren ist, noch nicht an dieser festgelegt sein, während die Widerlagerplatte 30 bereits mit dem anderen Kupplungsbereich 34, d.h. der Druckplattenbaugruppe 38 und der Kupplungsscheibe 70, zu einer Vormontagebaugruppe zusammengefasst ist. Diese Vormontagebaugruppe wird dann axial auf die koaxial äußere Abtriebswelle bzw.

Getriebeeingangswelle 62 aufgeschoben, und zwar bis das Drehentkopplungslager 86 an der Schulter 82 zur Anlage kommt. In dieser Phase kann auch die Kraftbaufschlagungsanordnung 54 in Kontakt mit dem Drehentkopplungslager 102 treten. Darauf folgend wird das Drehentkopplungslager 86 und mithin diese Vormontagebaugruppe durch Anbringen des Sicherungsrings 92 an der Abtriebswelle 62 axial arretiert. Es ist auf diese Art und Weise dann eine axial definierte Positionierung der gesamten Doppelkupplungsanordnung 12 bezüglich eines Getriebes vorgegeben. Nachfolgend wird dann der andere Kupplungsbereich, nämlich dessen Druckplattenbaugruppe 36 mit der Kupplungsscheibe 68, axial herangeführt und dabei die Kupplungsscheibe 68 auf die koaxial innere Abtriebswelle bzw. Getriebeeingangswelle 64 aufgeschoben und mit dieser zur gemeinsamen Drehung gekoppelt. Nachfolgend wird dann die Druckplattenbaugruppe 36 im Bereich ihres Gehäuses 40 mit der Widerlagerplatte 30 fest gekoppelt, beispielsweise durch Einschrauben von Schraubbolzen. Ist dies erfolgt, so kann noch das Übertragungselement 66 am axialen Ende des Betätigungselements 60 angebracht werden.

Nachdem also die Torsionsschwingungsdämpferanordnung 12 mit der Kopplungsanordnung 44 am Antriebsaggregat angebracht worden ist und die Doppelkupplungsanordnung 12 mit ihren beiden Kupplungsbereichen 32, 34 am Getriebe angebracht worden ist, werden im weiteren Fortschritt der Montage eines Antriebsstrangs dann diese beiden Systembereiche zusammengeführt, und zwar dadurch, dass sie zunächst in die in einem Fahrzeug dafür vorgesehene Einbaulage gebracht werden, ggf. fixiert werden und dann das ringartige Kopplungselement 47 in der vorangehend beschriebenen Art und Weise mit dem radial äußeren Bereich der zentralen Widerlagerplatte 30 fest verbunden wird. Durch diesen Montageschritt ist dann eine Drehmomentübertragungsverbindung zwischen einem Antriebsaggregat und einem Getriebe über die erfindungsgemäße Drehmomentübertragungsanordnung geschaffen. Dabei können, wie vorangehend bereits dargelegt, geringfügige Achsversätze zwischen dem Getriebe und dem Antriebsaggregat oder Achsneigungen durch die im Bereich der Kopplungsanordnung 44 bereitgestellte Elastitzität kompensiert werden.

## Patentansprüche

1. Drehmomentübertragungsanordnung für den Antriebsstrang eines Fahrzeugs, umfassend:
- eine Doppelkupplungsanordnung (12) mit einer zentralen Widerlagerplatte (30) und an beiden axialen Seiten der Widerlagerplatte (30) jeweils einem Kupplungsbereich (32, 34), wobei jeder Kupplungsbereich (32, 34) eine an ein Abtriebsorgan (64, 62) angekoppelte oder anzukoppelnde Kupplungsscheibe (68, 70) umfasst, welche gegen die Widerlagerplatte (30) pressbar ist, wobei die Widerlagerplatte (30) einen radial innen liegenden Lagerungsbereich (84) zur in wenigstens einer axialen Richtung feststehenden Lagerung bezüglich einem der an die Kupplungsscheiben anzukoppelnden Abtriebsorgane (32, 34) aufweist,
- eine Schwungmassenanordnung (14), über welche ein Drehmoment zwischen einem Antriebsorgan und der Doppelkupplungsanordnung (12) zu übertragen ist, wobei die Schwungmassenanordnung (14) eine Kopplungsanordnung (44) aufweist, die in einem radial äußeren Bereich mit der Doppelkupplungsanordnung (12) axialelastisch oder/und radialelastisch gekoppelt oder zu koppeln ist.

2. Drehmomentübertragungsanordnung nach Anspruch 1,
**dadurch gekennzeichnet, dass** die Kopplungsanordnung (44) die Widerlagerplatte (30) radial außen wenigstens bereichsweise übergreift und dort durch Befestigungsorgane (49) mit der Widerlagerplatte (30) gekoppelt oder zu koppeln ist.

3. Drehmomentübertragungsanordnung nach Anspruch 2,
**dadurch gekennzeichnet, dass** die die Kopplungsanordnung (44) mit der Widerlagerplatte (30) koppelnden Befestigungsorgane (49) sich näherungsweise in Umfangs- oder Tangentialrichtung erstrecken.

4. Drehmomentübertragungsanordnung nach einem der vorhergehenden Ansprüche,
**dadurch gekennzeichnet, dass** die Kopplungsanordnung (44) ein erstes ringartiges Kopplungselement (46) und ein damit axialelastisch oder/und radialealstisch verbundenes zweites ringartiges Kopplungselement (47) umfasst, wobei das zweite ringartige Kopplungselement (47) mit der Doppelkupplungsanordnung (12) gekoppelt oder zu koppeln ist.

5. Drehmomentübertragungsanordnung nach Anspruch 4,
**dadurch gekennzeichnet, dass** das erste ringartige Kopplungselement (46) und das zweite ringartige Kopplungselement (47) durch blattfederartige Verbindungselemente (51) miteinander verbunden sind.

6. Drehmomentübertragungsanordnung nach einem der Ansprüche 1 bis 5,
**dadurch gekennzeichnet, dass** die Schwungmassenanordnung (14) eine Torsionsschwingungsdämpferanordnung (14) umfasst mit einem an das Antriebsorgan anzukoppelnden Eingangsbereich (16) und einem mit der Kopplungsanordnung (44) verbundenen Ausgangsbereich (26).

7. Drehmomentübertragungsanordnung nach Anspruch 6,
**dadurch gekennzeichnet, dass** der Ausgangsbereich (26) und der Eingangsbereich (16) über eine wenigstens eine Radialrelativbewegung zwischen diesen zulassende Lagerungsanordnung (53) bezüglich einander abgestützt sind.

8. Drehmomentübertragungsanordnung nach Anspruch 6, oder 7,
**dadurch gekennzeichnet, dass** die Torsionsschwingungsdämpferanordnung (14) zwischen dem Eingangsbereich (16) und dem Ausgangsbereich (26) zwei seriell wirksame und radial gestaffelt angeordnete Dämpferstufen (28, 29) umfasst.

9. Drehmomentübertragungsanordnung nach einem der vorhergehenden Ansprüche,
**dadurch gekennzeichnet, dass** jeder Kupplungsbereich (32, 34) eine Druckplattenbaugruppe (36, 38) umfasst, wobei jede Druckplattenbaugruppe (36, 38) ein an der Widerlagerplatte (30) festgelegtes oder festzulegendes Gehäuse (40, 42), eine bezüglich des Gehäuses (40, 42) im Wesentlichen drehfest und axial bewegbar gehaltene Anpressplatte (48, 50) sowie eine bezüglich der Anpressplatte (48, 50) und des Gehäuses (40, 42) abgestützte Kraftbeaufschlagungsanordnung (52, 54) umfasst.

10. Verfahren zum Aufbau eines Antriebsstrangs mit einer Drehmomentübertragungsanordnung (10) nach einem der vorhergehenden Ansprüche, umfassend die Maßnahmen:
a) Koppeln der Schwungmassenanordnung (14) zusammen mit der damit fest verbundenen Kopplungsanordnung (44) mit einem Antriebsorgan,
b) Koppeln der Kupplungsscheiben (68, 70) der Doppelkupplungsanordnung (12) mit diesen zugeordneten Abtriebsorganen (64, 62) und dabei Lagern der zentralen Widerlagerplatte (30) mit ihrem Lagerungsbereich (84) bezüglich einem der Abtriebsorgane (64, 62),
c) nach Durchführung der Maßnahmen a) und b), Koppeln der Kopplungsanordnung (44) mit der Doppelkupplungsanordnung (12) in einem radial äußeren Bereich derselben.

11. Verfahren nach Anspruch 10,
**dadurch gekennzeichnet, dass** die Maßnahme b) die Teilmaßnahmen umfasst:
b₁) Koppeln der Kupplungsscheibe (70) eines an der Widerlagerplatte (30) festgelegten Kupplungsbereichs (34) mit einem Abtriebsorgan (62) und Lagern der Widerlagerplatte (30) bezüglich dieses Abtriebsorgans (62) bei nicht mit der Widerlagerplatte (30) verbundenem anderem Kupplungsbereich (32),
b₂) Ankoppeln der Kupplungsscheibe (68) des anderen Kupplungsbereichs (32) an das andere Abtriebsorgan (64) und Festlegen dieses Kupplungsbereichs (32) an der Widerlagerplatte (30).

12. Verfahren nach Anspruch 11,
**dadurch gekennzeichnet, dass** bei Durchführung der Teilmaßnahme b₁) die Widerlagerplatte (30) mit ihrem Lagerungsbereich (84) auf das eine Abtriebsorgan (62) aufgeschoben und daran in axialer Richtung im Wesentlichen unbewegbar arretiert wird.
